# EUROPEAN PATENT APPLICATION

(11) **EP 3 466 899 A1**
(43) Date of publication of application: **10.04.2019**
(21) Application number: 17802928.6
(22) Date of filing: 26.05.2017
(51) Int. Cl.: C03C 27/12, B32B 17/10, B32B 27/20, B32B 27/30, B60J 1/00, C08K 3/00, C08L 29/14, C08L 33/00

(54) **INTERLAYER FOR LAMINATED GLASS AND GLASS USING SAME**

(30) Priority: 27.05.2016 JP 2016106724
(71) Applicant: Nippon Kayaku Kabushiki Kaisha, Tokyo 100-0005 (JP)
(72) Inventor: TAKAHASHI Chihiro, Tokyo 115-8588 (JP)
(74) Representative: Hentrich Patentanwälte PartG mbB
(86) International application number: PCT/JP2017/019772
(87) International publication number: WO 2017/204342

(57) **Abstract**

Provided is an intermediate film for laminated glass characterized in that a polyvinyl acetal resin layer, and an inorganic fine particle-containing acrylic resin layer containing inorganic fine particles and an acrylic resin are laminated.

## Description

### Technical Field

The present invention relates to an intermediate film for laminated glass having excellent sound insulating properties and excellent transparency, and to a laminated glass using the intermediate film.

### Background Art

Laminated glass has been widely used for window glass of automobiles and buildings for various purposes such as shatter prevention, security performance, and UV cut performance. Laminated glass generally has a transparent polyvinyl butyral resin film as an intermediate film arranged between at least two transparent glass plates.

Conventional laminated glass has basic performances required for laminated glass such as that the weather resistance is good, the adhesion between the intermediate film and the glass is good, it is difficult for objects to penetrate therethrough upon subjecting to external impacts, and fragments of glass shatter less even when the glass is damaged due to external impacts, but have a problem of insufficient sound insulating properties.

In particular, the sound transmission loss decreases due to the coincidence effect in the middle to high sound range at frequencies of about 2000 to 5000 Hz, and the sound insulating properties decrease. Here, the coincidence effect is a phenomenon that, when a sound wave is incident on a glass plate, a transverse wave is conducted on the glass plate surface due to the stiffness and inertia of the glass plate, so that the transverse wave and the incident sound resonate, and the sound is transmitted. The smaller the surface density of the laminated glass, that is, the smaller the thickness of the glass plate, the more this coincidence effect shifts to the higher frequency side.

Recently, requirements for the sound insulating properties have been increasing more and more, and laminated glass exhibiting excellent sound insulation performance other than the basic performances as described above is required. As an intermediate film for laminated glass, and a laminated glass which have such sound insulating properties, Patent Literature 1 discloses a laminated glass using a sound-insulating intermediate film for laminated glass having a layered structure, using two types of films of an opaque polyvinyl acetal resin containing inorganic fine particles and a transparent polyvinyl acetal resin, configured by laminating such films into at least two or more layers.

### Document List

### Patent Literature

Patent Literature 1: Japanese Patent No. 5249494

### Summary of Invention

### Technical Problem

However, the intermediate film for laminated glass of Patent Literature 1 has poor transparency and has a problem of failing to satisfy the regulation on transparency for car windshields. Therefore, an intermediate film for laminated glass having both transparency and sound insulating properties has been expected.

Accordingly, an object of the present invention is to provide an intermediate film for laminated glass having high transparency and excellent sound insulating properties, and to provide a laminated glass using the intermediate film.

### Solution to Problem

As a result of diligent studies in order to achieve the above object, the inventors found that an intermediate film for laminated glass that is excellent in both transparency and sound insulating properties is obtained by using a laminate of a polyvinyl acetal resin layer and an inorganic fine particle-containing an acrylic resin layer that contains inorganic fine particles and an acrylic resin, thereby accomplishing the present invention.

That is, the present invention relates to (1) to (12) below.
(1) An intermediate film for laminated glass characterized in that a polyvinyl acetal resin layer; and an inorganic fine particle-containing acrylic resin layer containing inorganic fine particles and an acrylic resin are laminated.
(2) The intermediate film for laminated glass according to (1), wherein the polyvinyl acetal resin layer includes a first polyvinyl acetal resin layer and a second polyvinyl acetal resin layer, and the first polyvinyl acetal resin layer, the inorganic fine particle-containing acrylic resin layer, and the second polyvinyl acetal resin layer are laminated in this order.
(3) The intermediate film for laminated glass according to (1) or (2), wherein the inorganic fine particles are at least one selected from the group consisting of calcium carbonate and silica.
(4) The intermediate film for laminated glass according to any one of (1) to (3), comprises an additional resin layer between the polyvinyl acetal resin layer and the inorganic fine particle-containing acrylic resin layer.
(5) The intermediate film for laminated glass according to (4), wherein the additional resin layer is an optical functional layer.
(6) The intermediate film for laminated glass according to (5), wherein the optical functional layer is a laminate of one or two or more layers selected from the group consisting of a light absorbing layer, a light reflecting layer, and a birefringent layer.
(7) The intermediate film for laminated glass according to (5) or (6), wherein the optical functional layer is a laminate of a light reflecting layer and a quarter-wave plate.
(8) The intermediate film for laminated glass according to (7), wherein the optical functional layer is arranged such that the light reflecting layer is located on the inorganic fine particle-containing acrylic resin layer side.
(9) The intermediate film for laminated glass according to any one of (5) to (8), wherein the optical functional layer contains a polymerizable liquid crystal.
(10) The intermediate film for laminated glass according to (9), wherein the polymerizable liquid crystal is cholesteric liquid crystal.
(11) A laminated glass comprises the intermediate film for laminated glass according to any one of (1) to (10); and at least two transparent glass plates bonded to both sides of the intermediate film for laminated glass.
(12) The laminated glass according to any one of (11), wherein the haze of the laminated glass is 1% or less.

### Effects of Invention

The present invention can provide an intermediate film for laminated glass having high transparency and excellent sound insulating properties and can provide a laminated glass using the intermediate film.

### Description of Embodiments

### [Intermediate film for laminated glass]

The intermediate film for laminated glass according to the present invention is characterized in that a polyvinyl acetal resin layer, and an inorganic fine particle-containing acrylic resin layer containing inorganic fine particles and an acrylic resin are laminated. The polyvinyl acetal resin layer preferably includes a first polyvinyl acetal resin layer and a second polyvinyl acetal resin layer, and thus the intermediate film for laminated glass includes the first polyvinyl acetal resin layer, the acrylic resin layer, and the second polyvinyl acetal resin layer in this order. The intermediate film for laminated glass may optionally include an additional resin layer between the polyvinyl acetal resin layer and the inorganic fine particle-containing acrylic resin layer.

### (A) Inorganic fine particle-containing acrylic resin layer

The inorganic fine particle-containing acrylic resin layer (which will be hereinafter referred to also as "resin layer A" or "(A)") contains the acrylic resin layer and the inorganic fine particles mixed and dispersed in the acrylic resin layer. It is preferable that the thickness of the inorganic fine particle-containing acrylic resin layer be 10 to 150 µm, more preferably 20 to 120 µm. If the thickness is less than 10 µm, a sufficient sound insulation performance may not be obtained in some cases. The workability is improved by the thickness being 150 µm or less.

### <Acrylic resin layer>

The acrylic resin used for the acrylic resin layer is not specifically limited, and conventionally used known acrylic resins can be used therefor. In window glass applications, it is preferable to be an acrylic copolymer having good weatherproof performance. Further, it is preferable to be an acrylic copolymer having viscoelastic properties in order to obtain the sound insulation performance.

### [Acrylic copolymer]

The acrylic copolymer contains a structural unit based on at least one type of (meth)acrylic acid ester, and can be obtained by copolymerizing one or two or more types of (meth)acrylic acid esters and, optionally, an additional monomer, generally by copolymerizing the main monomer that gives a polymer having a low glass transition temperature with a comonomer that gives a polymer having a high glass transition temperature, when the polymers are formed as homopolymers. Such an acrylic copolymer has viscoelastic properties. For example, as a monomer that serves as the main component of the acrylic copolymer, an acrylic acid alkyl ester in which the number of carbon atoms of the alkyl group is 2 to 14 or a methacrylic acid alkyl ester in which the number of carbon atoms of the alkyl group is 4 to 16, that they give a polymer having a low glass transition temperature when formed as a polymer, and a monomer which is copolymerizable with the acrylic acid alkyl ester or the methacrylic acid alkyl ester, that it gives a polymer having a higher glass transition temperature than those when formed as a polymer is used.

Examples of the (meth)acrylic acid ester can include acrylic acid alkyl ester, methacrylic acid alkyl ester, acrylic acid alkoxy ester, methacrylic acid alkoxy ester, alkylene glycol acrylate, and alkylene glycol methacrylate.

Examples of the acrylic acid alkyl ester include methyl acrylate, ethyl acrylate, n-propyl acrylate, isopropyl acrylate, n-butyl acrylate, sec-butyl acrylate, tert-butyl acrylate, n-pentyl acrylate, isoamyl acrylate, n-hexyl acrylate, n-heptyl acrylate, n-octyl acrylate, 2-ethylhexyl acrylate, nonyl acrylate, isooctyl acrylate, isononyl acrylate, isostearyl acrylate, decyl acrylate, dodecyl acrylate, isobornyl acrylate, and cyclohexyl acrylate.

Examples of the methacrylic acid alkyl ester include methyl methacrylate, ethyl methacrylate, n-propyl methacrylate, isopropyl methacrylate, n-butyl methacrylate, sec-butyl methacrylate, tert-butyl methacrylate, n-pentyl methacrylate, isoamyl methacrylate, n-hexyl methacrylate, n-heptyl methacrylate, n-octyl methacrylate, 2-ethylhexyl methacrylate, nonyl methacrylate, decyl methacrylate, dodecyl methacrylate, n-lauryl methacrylate, isobornyl methacrylate, and cyclohexyl methacrylate.

Examples of the acrylic acid alkoxy ester can include 2-methoxyethyl acrylate, 2-ethoxyethyl acrylate, 2-methoxypropyl acrylate, 3-methoxypropyl acrylate, 2-methoxybutyl acrylate, and 4-methoxybutyl acrylate.

Examples of the methacrylic acid alkoxy ester can include 2-methoxyethyl methacrylate, 2-ethoxyethyl methacrylate, 2-methoxypropyl methacrylate, 3-methoxypropyl methacrylate, 2-methoxybutyl methacrylate, and 4-methoxybutyl methacrylate.

Examples of the alkylene glycol acrylate include ethylene glycol acrylate, polyethylene glycol acrylate, propylene glycol acrylate, and polypropylene glycol acrylate.

Examples of the alkylene glycol methacrylate include ethylene glycol methacrylate, polyethylene glycol methacrylate, propylene glycol methacrylate, and polypropylene glycol methacrylate.

Among these, when the acrylic acid alkyl ester having 4 to 8 carbon atoms is used in an amount of preferably 40 mass% (which will be hereinafter shown simply by "%") or more, more preferably 50% or more, in the entire monomer, copolymerizability is good, and the tackiness and the flexibility of the resin to be obtained is rendered excellent. In particular, n-butyl acrylate and 2-ethylhexyl acrylate are preferably used.

The acrylic copolymer may further have a structural unit based on a functional group-containing monomer as an additional monomer. Examples of the functional group-containing monomer can include a carboxyl group-containing monomer, a hydroxy group-containing monomer, an amino group-containing monomer, an amide group-containing monomer, and an epoxy group-containing monomer.

Examples of the carboxyl group-containing monomer can include acrylic acid, methacrylic acid, β-carboxyethyl acrylate, β-carboxyethyl methacrylate, 5-carboxypentyl acrylate, succinic acid monoacryloyloxyethyl ester, succinic acid monomethacryloyloxyethyl ester, ω-carboxypolycaprolactone monoacrylate, ω-carboxypolycaprolactone monomethacrylate, itaconic acid, crotonic acid, fumaric acid, maleic acid, and maleic anhydride.

Examples of the hydroxy group-containing monomer can include 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 4-hydroxybutyl acrylate, 4-hydroxybutyl methacrylate, 2-hydroxy-3-chloropropyl acrylate, 2-hydroxy-3-chloropropyl methacrylate, 2-hydroxy-3-phenoxypropyl acrylate, and 2-hydroxy-3-phenoxypropyl methacrylate.

Examples of the amino group-containing monomer can include dimethylaminoethyl acrylate, dimethylaminoethyl methacrylate, diethylaminoethyl acrylate, and diethylaminoethyl methacrylate.

Examples of the amide group-containing monomer can include acrylamide, methacrylamide, N-methylol acrylamide, N-methylol methacrylamide, and N,N-dimethylacrylamide.

Examples of the epoxy group-containing monomer can include acrylic acid glycidyl ether, methacrylic acid glycidyl ether, acrylic acid 2-ethyl glycidyl ether, and methacrylic acid 2-glycidyl ether.

Since these functional group-containing monomers act as crosslinking points of the later-described polyfunctional isocyanate compound, the carboxyl group-containing monomer and the hydroxy group-containing monomer that have good reactivity as crosslinking points are preferable among the aforementioned monomers, where the carboxyl group-containing monomer is especially preferable, and acrylic acid is particularly preferable.

The acrylic copolymer may further have a structural unit based on an aromatic ring-containing monomer as another additional monomer. Examples of the aromatic ring-containing monomer can include aryl acrylates such as benzyl acrylate, phenoxyethyl acrylate, phenyl acrylate, and naphthyl acrylate, and aryl methacrylates such as benzyl methacrylate, phenoxyethyl methacrylate, phenyl methacrylate, and naphthyl methacrylate.

Other than the aforementioned additional monomers, further additional monomers that are copolymerizable with these monomers can be mixed. Examples of such monomers can include vinyl acetate, styrene, α-methylstyrene, allyl acetate, and acrylonitrile.

The acrylic copolymer can be obtained by copolymerization by a known polymerization method such as solution polymerization, emulsion polymerization, or suspension polymerization, among which, solution polymerization is preferable, since the molecular weight is easily adjusted and impurities can be reduced. The polymerization can be appropriately performed using a polymerization initiator.

It is preferable that the weight-average molecular weight (Mw) of the acrylic copolymer be 300000 to 3000000. Due to the weight-average molecular weight falling within this range, there are the effects that the mechanical strength is high, and the impact resistance and the penetration resistance, which are basic performances required for laminated glass, are good.

Further, as the acrylic resin forming the acrylic copolymer, either the crosslinked type or the uncrosslinked type can be used. In the case of the crosslinked type, a method using various crosslinking agents or curing agents such as an epoxy compound, a polyfunctional isocyanate compound as a curing agent, a metal chelate compound, a metal alkoxide, a metal salt, an amine compound, a hydrazine compound, or an aldehyde compound, or a method of irradiation with radiation can be mentioned, and these are appropriately selected depending on the type or the like of the functional group.

Examples of the polyfunctional isocyanate compound include isocyanate monomers such as tolylene diisocyanate, chlorophenylene diisocyanate, hexamethylene diisocyanate, tetramethylene diisocyanate, isophorone diisocyanate, xylylene diisocyanate, diphenylmethane diisocyanate, and hydrogenated diphenylmethane diisocyanate, and polyol-modified isocyanate compounds in which a polyol such as trimethylolpropane is added to such a isocyanate monomer, isocyanurate compounds, biuret compounds, and further urethane prepolymer-type isocyanate compounds that are subjected to addition reaction with polyether polyols, polyester polyols, acrylic polyols, polybutadiene polyols, polyisoprene polyols, or the like.

The degree of crosslinking of the polymer materials forming the acrylic resin differs depending on various conditions such as the type, composition, or the like, of the acrylic copolymer and is not specifically limited.

### [Curable resin]

The acrylic resin layer may further optionally contain ultraviolet curable resins, thermosetting resins, or mixtures of these resins. The content of the ultraviolet curable resins, the thermosetting resins, or the mixtures of these resins in the acrylic resin layer is preferably 20 to 120 parts by mass, more preferably 40 to 100 parts by mass, further preferably 60 to 80 parts by mass, with respect to 100 parts by mass of the acrylic resin.

### (Ultraviolet curable resins)

The ultraviolet curable resins contain a structural unit, for example, based on monomers, oligomers, or polymers that have an acryloyl group or an epoxy group (which will be hereinafter referred to also as "ultraviolet curable monomers or the like"). The ultraviolet curable monomers or the like may be of one type alone or two or more types. The ultraviolet curable monomers or the like are, for example, acrylate monomers having an acryloyl group or urethane acrylates.

It is preferable that the acrylate monomers have two or more acryloyl groups, and it is more preferable to have 2 to 9 acryloyl groups. Further preferably, it is good to have 2 to 6 acryloyl groups. Examples of the acrylate monomers include trimethylolpropane tri(meth)acrylate, pentaerythritol tri(meth)acrylate, pentaerythritol tetra(meth)acrylate, ditrimethylolpropane tetra(meth)acrylate, dipentaerythritol pentaacrylate, dipentaerythritol hexaacrylate, a reaction product of pentaerythritol tri(meth)acrylate with 1,6-hexamethylene diisocyanate, a reaction product of pentaerythritol tri(meth)acrylate with isophorone diisocyanate, tris(acryloxyethyl) isocyanurate, tris(methacryloxyethyl) isocyanurate, a reaction product of glycerol triglycidyl ether with (meth)acrylic acid, caprolactone-modified tris(acryloxyethyl) isocyanurate, a reaction product of trimethylolpropane triglycidyl ether and (meth)acrylic acid, triglycerol di(meth)acrylate, a reaction product of propylene glycol diglycidyl ether with (meth)acrylic acid, polypropylene glycol di(meth)acrylate, tripropylene glycol di(meth)acrylate, polyethylene glycol di(meth)acrylate, tetraethylene glycol di(meth)acrylate, triethylene glycol di(meth)acrylate, pentaerythritol di(meth)acrylate, a reaction product of 1,6-hexanediol diglycidyl ether with (meth)acrylic acid, 1,6-hexanediol di(meth)acrylate, glycerol di(meth)acrylate, a reaction product of ethylene glycol diglycidyl ether with (meth)acrylic acid, a reaction product of diethylene glycol diglycidyl ether with (meth)acrylic acid, bis(acryloxyethyl) hydroxyethyl isocyanurate, bis(methacryloxyethyl) hydroxyethyl isocyanurate, a reactive product of bisphenol A diglycidyl ether with (meth)acrylic acid, tetrahydrofurfuryl (meth)acrylate, caprolactone-modified tetrahydrofurfuryl (meth)acrylate, 2-hydroxyethyl (meth)acrylate, 2-hydroxypropyl (meth)acrylate, polypropylene glycol (meth)acrylate, polyethylene glycol (meth)acrylate, phenoxyhydroxypropyl (meth) acrylate, acryloyl morpholine, methoxypolyethylene glycol (meth)acrylate, methoxytetraethylene glycol (meth)acrylate, methoxytriethylene glycol (meth)acrylate, methoxyethylene glycol (meth)acrylate, methoxyethyl (meth)acrylate, glycidyl (meth)acrylate, glycerol (meth)acrylate, ethyl carbitol (meth)acrylate, 2-ethoxyethyl (meth)acrylate, N,N-dimethylaminoethyl (meth)acrylate, 2-cyanoethyl (meth)acrylate, a reaction product of butyl glycidyl ether with (meth)acrylic acid, butoxytriethylene glycol (meth)acrylate, and butanediol mono(meth)acrylate. These may be used individually or may be a mixture of a plurality of monomers.

The urethane acrylate can be obtained by conventionally known methods and can be synthesized, for example, by reacting terminal isocyanate prepolymers obtained from polyol compounds and isocyanate compounds with acrylates having a hydroxy group. Further, commercially available curable urethane acrylates may be used.

Examples of the polyol compounds include polyether polyols, polyester polyols, and copolymers of acrylic acid esters with hydroxyethyl (meth)acrylate. Examples of the polyether polyols include polyoxytetramethylene glycol. Examples of the polyester polyols include polyadipate polyol and polycarbonate polyol. Examples of the isocyanate compound include methylenebis(p-phenylene diisocyanate), an adduct of hexamethylene diisocyanate and hexanetriol, hexamethylene diisocyanate, tolylene diisocyanate, an adduct of tolylene diisocyanate and trimethylolpropane, 1,5-naphthylene diisocyanate, thiopropyl diisocyanate, ethyl benzene-2,4-diisocyanate, 2,4-tolylene diisocyanate dimers, hydrogenated xylylene diisocyanate, and tris(4-phenyl isocyanate) neophosphate. Examples of the acrylate include for example, methyl (meth)acrylate, ethyl (meth)acrylate, butyl (meth)acrylate, 2-ethylhexyl (meth)acrylate, methoxyethyl (meth)acrylate, butoxyethyl (meth)acrylate, and phenyl (meth)acrylate.

Examples of the urethane acrylates include, as product examples classified by the polyol type, (1) UX-2201, UX-2301, UX-6101, and UX-0937 (all of which are manufactured by Nippon Kayaku Co., Ltd.) as polyether polyols and (2) UX-3204, UX-3301, and UX-4101 (all of which are manufactured by Nippon Kayaku Co., Ltd.) as polyester polyols. These urethane acrylates may be used individually or may be a mixture of a plurality of urethane acrylates.

### (Thermosetting resins)

It is preferable that the thermosetting resins be epoxy resins having a structural unit, for example, based on one or two or more types of monomers having an epoxy group (which will be hereinafter referred to also as "epoxy resin monomers"). The thermosetting resins may be phenolic resins, urea resins, melamine resins, vinyl ester resins, and unsaturated polyester resins, or the like, other than the epoxy resins, and are preferably epoxy resins and vinyl ester resins. Epoxy resins having a molecular weight of 250 to 1000 are preferable, those having a molecular weight of 250 to 400 are further preferable, and further those having a structure with two aromatic rings or alicyclic rings are more preferable than those having a structure with three or more aromatic rings or alicyclic rings. Examples of the epoxy resins having such a structure include bisphenol A derivatives ("jER828" and "jER1001" manufactured by Mitsubishi Chemical Corporation), F-type derivatives ("jER806" manufactured by Mitsubishi Chemical Corporation), hydrogenated bisphenol A type ("YX-8034" manufactured by Mitsubishi Chemical Corporation), or biphenyl type ("YX-4000" manufactured by Mitsubishi Chemical Corporation). These epoxy resins may be of one type alone or may be of two or more types.

### [Additives]

The acrylic resin layer may further contain plasticizers, as needed. Examples of the plasticizers include esters such as phthalic acid ester, trimellitic acid ester, pyromellitic acid ester, adipic acid ester, sebacic acid ester, phosphoric acid triester, or glycol ester, process oils, liquid polyethers, liquid polyterpenes, and other liquid resins, and one or two or more types of these can be mixed for use. It is preferable that such plasticizers have good compatibility with the acrylic copolymer.

The acrylic resin layer can contain various additives such as tackifying resins, ultraviolet absorbers, antioxidants, light stabilizers, curing agents, silane coupling agents, heat-ray shielding fine particles, various dyes, pigments, other than the plasticizers, as needed.

<Inorganic fine particles>

Examples of the inorganic fine particles include calcium carbonate, alumina, kaolin clay, calcium silicate, magnesium oxide, magnesium hydroxide, aluminum hydroxide, magnesium carbonate, talc, feldspar powder, mica, baryte, barium carbonate, titanium oxide, silica, and glass beads, where calcium carbonate and silica are particularly preferable. These may be used individually or may be mixed for use.

It is preferable that the average particle size of the inorganic fine particles be 1 to 150 nm, it is further preferable to be 5 to 120 nm, and it is particularly preferable to be 10 to 100 nm. The average particle size can be measured by a dynamic light scattering method using a light scattering measuring device (for example, "DLS-6000AL" manufactured by Otsuka Electronics Co., Ltd.) with an Ar laser as a light source. Further, the inorganic fine particles are used, for example, in the range of 1 to 200 parts by mass, preferably in the range of 5 to 150 parts by mass, further preferably in the range of 10 to 100 parts by mass, with respect to 100 parts by mass of the acrylic resin. The mechanical strength can be enhanced and the sound insulation performance can be improved by using the inorganic fine particles in an amount within such a range.

### <Coating solution>

The inorganic fine particle-containing acrylic resin layer can be obtained by a method of forming a coating solution obtained by mixing an acrylic resin and inorganic fine particles by a common mixing method into a sheet by a common coating method such as a comma coater, a bar coater, a spin coater, a spray coater, a roll coater, a gravure coater, and a knife coater. To the coating solution, ultraviolet curable monomers or the like, thermosetting monomers, or mixtures of these, plasticizers, opacifiers, heat-ray shielding fine particles, light shielding agents, and/or various pigments, and various additives that are added as required can be optionally selectively mixed.

In the case of mixing the ultraviolet curable monomers or the like, it is preferable to further mix a photopolymerization initiator to the coating solution. After the coating solution is formed into a sheet, curing is performed by irradiation with ultraviolet radiation. Examples of the photopolymerization initiator include acetophenone compounds such as 2-methyl-1-[4-(methylthio)phenyl]-2-morpholinopropane-1-one ("IRGACURE-907" manufactured by Ciba Specialty Chemicals), 1-hydroxycyclohexyl phenyl ketone ("IRGACURE-184" manufactured by Ciba Specialty Chemicals), 4-(2-hydroxyethoxy)-phenyl(2-hydroxy-2-propyl) ketone ("IRGACURE-2959" manufactured by Ciba Specialty Chemicals), 1-(4-dodecylphenyl)-2-hydroxy-2-methylpropane-1-one ("DAROCUR-953" manufactured by Merck KGaA), 1-(4-isopropylphenyl)-2-hydroxy-2-methylpropane-1-one ("DAROCUR-1116" manufactured by Merck KGaA), 2-hydroxy-2-methyl-1-phenylpropane-1-one ("IRGACURE-1173" manufactured by Ciba Specialty Chemicals), and diethoxyacetophenone, benzoin compounds such as benzoin, benzoin methyl ether, benzoin ethyl ether, benzoin isopropyl ether, benzoin isobutyl ether, and 2,2-dimethoxy-2-phenylacetophenone ("IRGACURE-651" manufactured by Ciba Specialty Chemicals), benzophenone compounds such as benzoyl benzoic acid, methyl benzoylbenzoate, 4-phenylbenzophenone, hydroxybenzophenone, 4-benzoyl-4'-methyldiphenyl sulfide, and 3,3'-dimethyl-4-methoxybenzophenone ("KAYACURE MBP" manufactured by Nippon Kayaku Co., Ltd.), and thioxanthone compounds such as thioxanthone, 2-chlorothioxanthone ("KAYACURE CTX" manufactured by Nippon Kayaku Co., Ltd.), 2-methylthioxanthone, 2,4-dimethylthioxanthone ("KAYACURE RTX" manufactured by Nippon Kayaku Co., Ltd.), isopropylthioxanthone, 2,4-dichlorothioxanthone ("KAYACURE CTX" manufactured by Nippon Kayaku Co., Ltd.), 2,4-diethylthioxanthone ("KAYACURE DETX" manufactured by Nippon Kayaku Co., Ltd.), and 2,4-diisopropylthioxanthone ("KAYACURE DITX" manufactured by Nippon Kayaku Co., Ltd.). Preferably, examples thereof include Irgacure TPO, Irgacure TPO-L, Irgacure OXE01, Irgacure OXE02, Irgacure 1300, Irgacure 184, Irgacure 369, Irgacure 379, Irgacure 819, Irgacure 127, Irgacure 907, or Irgacure 1173 (all manufactured by BASF SE), particularly preferably, Irgacure TPO, Irgacure TPO-L, Irgacure OXE01, Irgacure OXE02, Irgacure 1300, or Irgacure 907. These photopolymerization initiators may be used individually or may be a mixture of a plurality of photopolymerization initiators. It is preferable that the addition amount of these curing agents be 3 to 8 parts by mass, it is more preferable to be 3 to 5 parts by mass, with respect to 100 parts by mass of ultraviolet curable monomers.

In the case of mixing thermosetting monomers, it is preferable to further mix an acid catalyst, a curing agent, and a curing accelerator, as required, and curing is performed by heating after the coating solution is formed into a sheet.

In the case of using epoxy resin monomers as the thermosetting monomers, examples of the curing agent for curing the epoxy resin monomers include amine compounds, acid anhydride compounds, amide compounds, and phenol compounds. Specific examples thereof include diaminodiphenylmethane, diethylenetriamine, triethylenetetramine, diaminodiphenylsulfone, isophoronediamine, dicyandiamide, a polyamide resin synthesized from a dimer of linolenic acid and ethylenediamine, phthalic anhydride, trimellitic anhydride, pyromellitic anhydride, maleic anhydride, tetrahydrophthalic anhydride, methyl tetra10hydrophthalic anhydride, methyl endomethylene tetrahydrophthalic anhydride, hexahydrophthalic anhydride, methyl hexahydrophthalic anhydride, phenol novolac, and modified products of these. These curing agents may be used individually or may be a mixture of a plurality of curing agents. It is preferable that the addition amount of these curing agents be 30 to 38 parts by mass with respect to 100 parts by mass of the epoxy resin monomers.

Examples of the curing accelerator include imidazols, tertiary amines, phenols, and Lewis acid salts such as 3 boron fluoride-monoethylamine complex, and among them, use of zinc organic carboxylate is particularly preferable, since the cured product of the epoxy resin is colorless and transparent. Specific examples thereof include zinc acetate, zinc hexanoate, zinc 2-ethylhexanoate, zinc laurate, zinc palmitate, zinc stearate, zinc ricinoleate, zinc benzoate, and zinc naphthenate having one, two, or three rings and having 6 to 20 carbon atoms. Examples of the curing accelerator for the zinc organic carboxylate include 18% Octope Zn (manufactured by Hope Chemical Co., LTD). These curing accelerators may be used individually or may be a mixture of a plurality of curing accelerators. It is preferable that the addition amount of these curing accelerators be 0.4 to 0.6 part by mass with respect to 100 parts by mass of the total of the ultraviolet curable monomers and the epoxy resin monomers.

In the case of mixing ultraviolet curable monomers, thermosetting monomers, or mixtures of these to the coating solution, various additives such as plasticizers, ultraviolet absorbers, antioxidants, light stabilizers, leveling agents, defoamers, heat-ray shielding fine particles, various dyes, pigments, for example, may be further mixed, as required.

[Acrylic resin laminate]

The inorganic fine particle-containing acrylic resin layer may be a laminate of a plurality of layers. The inorganic fine particle-containing acrylic resin layer may further include a layer such as ultraviolet curable resin layers, thermosetting resin layers, and/or mixtures of ultraviolet curable resins and thermosetting resins, for example, in addition to the aforementioned acrylic resin layer. Adhesive layers or the like may be provided between such layers. By laminating resins having different viscoelastic properties, sound energy is effectively converted into and absorbed as thermal energy due to the internal friction effect between the resin layers, and prevention of the reduction in sound insulating properties particularly in the middle to high sound range of about 2000 to 5000 Hz due to the coincidence effect is expected.

An ultraviolet curable resin layer can be formed by curing an ultraviolet curable composition in which a plurality of monomers having an acryloyl group or an epoxy group are mixed by irradiation with ultraviolet radiation in the presence of a photopolymerization initiator. The ultraviolet-curable resin compositions, for example, may contain acrylate monomers having an acryloyl group, urethane acrylates, and photopolymerization initiators. The same acrylate monomers and urethane acrylates as described for the aforementioned ultraviolet curable resin can be used. Likewise, the same photopolymerization initiators as described above can be used.

A thermosetting resin layer, for example, can be formed by curing an epoxy resin composition in which a plurality of monomers having an epoxy group are mixed by heating in the presence of an acid catalyst. Alternatively, the thermosetting resin layer can be formed by curing a composition containing a plurality of monomers or polymers having an amino group, a carboxyl group, and/or a hydroxy group by heating in the presence of a compound having an isocyanate group or melamine.

The epoxy resin composition may contain epoxy resins, curing agents, and optional curing accelerators. Epoxy resins having a molecular weight of 250 to 1000 are preferable, those having a molecular weight of 250 to 400 are further preferable, and further those with a structure having two aromatic rings or alicyclic rings are more preferable, than those having a structure with three or more aromatic rings or alicyclic rings. Examples of the epoxy resins with such a structure include bisphenol A derivatives ("jER828" and "jER1001" manufactured by Mitsubishi Chemical Corporation), F-type derivatives ("jER806" manufactured by Mitsubishi Chemical Corporation), hydrogenated bisphenol A type ("YX-8034" manufactured by Mitsubishi Chemical Corporation), or biphenyl type ("YX-4000" manufactured by Mitsubishi Chemical Corporation). Only one type of these epoxy resins may be used, or two or more types of them may be mixed for use.

Examples of the curing agents include photopolymerization initiators for curing the ultraviolet curable resins and curing agents for curing the epoxy resin compositions. As the photopolymerization initiators, the curing agents, and the optional curing accelerators, those described above can be used in the same manner.

The ultraviolet-curable resin compositions, the thermosetting resin compositions, and the mixtures thereof, for example, can further contain various additives such as plasticizers, ultraviolet absorbers, antioxidants, light stabilizers, leveling agents, defoamers, inorganic fine particles, heat-ray shielding fine particles, various dyes, and pigments, as needed.

(B) Polyvinyl acetal resin layer

The polyvinyl acetal resin layer (which will be hereinafter referred to also as "resin layer B" or "(B)") is not specifically limited, but can be, for example, a resin layer formed by using a resin composition in which an appropriate amount of a plasticizer is dispersed in and mixed to a known polyvinyl acetal resin conventionally used as an intermediate film of laminated glass. The polyvinyl acetal resin layer may be a single layer or may contain two or more layers. It is preferable that the thickness be 200 to 1500 µm, more preferably 500 to 1000 µm. Here, in the case where the polyvinyl acetal resin layer is composed of two or more layers, the thickness refers to the total thickness of the two or more layers. Due to the thickness of the polyvinyl acetal resin falling within the aforementioned range, there are effects that the impact resistance and the penetration resistance of the laminated glass are good.

It is preferable that the polyvinyl acetal resin layer be arranged as the outermost layer in the laminated glass intermediate film. The outermost layer means the layer that contacts glass. Due to the polyvinyl acetal resin layer being the outermost layer, the impact resistance and the penetration resistance of the laminated glass are enhanced, and there is also an effect of shatter prevention of glass.

It is preferable that the polyvinyl acetal resin layer be a transparent polyvinyl acetal resin layer formed from a polyvinyl acetal resin which is obtained by acetalization of polyvinyl alcohol with aldehyde having 3 to 4 carbon atoms and in which the component of vinyl acetate (residual acetyl groups) is 14 mol% or less, and a resin composition containing a plasticizer. The resin composition for forming the polyvinyl acetal resin layer may further contain inorganic fine particles, heat-ray shielding fine particles, light shielding agents, pigments, or the like, as required.

The polyvinyl acetal resin can be obtained using a known method. For example, powder of the polyvinyl acetal resin can be obtained by dissolving a predetermined polyvinyl alcohol in hot water, adding a required acid catalyst and a predetermined aldehyde thereto while maintaining the obtained aqueous solution at a predetermined temperature, for example, 0 to 95°C, allowing the acetalization reaction to proceed under stirring, and then increasing the reaction temperature for aging to complete the reaction, followed by neutralization, water washing, and drying.

The plasticizer is not specifically limited, but known plasticizers that are generally used as plasticizers for intermediate films of this type can be used. For example, triethylene glycol-di-2-ethyl butyrate (3GH), triethylene glycol-di-2-ethyl hexanoate (3GO), triethylene glycol-di-n-heptanoate (3G7), tetraethylene glycol-di-2-ethyl hexanoate (4GO), tetraethylene glycol-di-n-heptanoate (4G7), oligoethylene glycol-di-2-ethyl hexanoate (NGO), and the like, are suitably used. These plasticizers are generally used in the range of 25 to 70 parts by mass with respect to 100 parts by mass of the polyvinyl acetal resin.

Examples of the aforementioned inorganic fine particles include calcium carbonate, alumina, kaolin clay, calcium silicate, magnesium oxide, magnesium hydroxide, aluminum hydroxide, magnesium carbonate, talc, feldspar powder, mica, baryte, barium carbonate, titanium oxide, silica, and glass beads. These may be used individually or may be mixed for use. It is preferable that the average particle size of the inorganic fine particles be 1 to 150 nm, where 5 to 120 nm is further preferable, and 10 to 100 nm is particularly preferable. These average particle sizes can be measured by a dynamic light scattering method using a light scattering measuring device (for example, "DLS-6000AL" manufactured by Otsuka Electronics Co., Ltd.) and an Ar laser as a light source. Further, the inorganic fine particles are generally used in the range of 1 to 200 parts by mass, preferably in the range of 5 to 150 parts by mass, further preferably in the range of 10 to 100 parts by mass, with respect to 100 parts by mass of the polyvinyl acetal resin.

Examples of the heat-ray shielding fine particles include tin-doped indium oxide (ITO), antimony-doped tin oxide (ATO), aluminum-doped zinc oxide (AZO), indium-doped zinc oxide (IZO), tin-doped zinc oxide, silicon-doped zinc oxide, zinc antimonate, 6 lanthanum boride, 6 cerium boride, gold fine particles, silver fine particles, platinum fine particles, and aluminum fine particles. Examples of the light shielding agents include carbon black and red iron oxide. Examples of the pigments include a mixed pigment of dark reddish brown formed by mixing four kinds of a black pigment, carbon black, a red pigment (C.I.Pigment red), a blue pigment (C.I.Pigment blue), and a yellow pigment (C.I.Pigment yellow). The addition amounts of the heat-ray shielding fine particles and the light shielding agents are appropriately adjusted so as not to impair the transparency of the intermediate film for laminated glass.

The polyvinyl acetal resin layer can further optionally contain various additives used for intermediate films of this type, such as ultraviolet absorbers, antioxidants, and adhesion adjusters. As the ultraviolet absorbers, for example, 2-(2'-hydroxy-5'-methylphenyl) benzotriazole, 2-(2'-hydroxy-3',5'-di-t-methylphenyl) benzotriazole, 2-(2'-hydroxy-3'-t-butyl-5'-methylphenyl)-5-chlorobenzotriazole, and 2-(2'-hydroxy-3',5'-di-amylphenyl) benzotriazole are preferable. Further, hindered amine light stabilizers are also preferable. As the antioxidants, t-butylhydroxytoluene, tetrakis-[methylene-3-(3',5'-di-t-butyl-4'-hydroxyphenyl) propionate] methane, and the like are preferable. As the adhesion adjusters, alkali metal salts or alkaline earth metal salts of organic acids or inorganic acids are preferable.

The polyvinyl acetal resin layer can be obtained by a method of kneading the polyvinyl acetal resin, plasticizers, and various additives that are added, as required, using an extruder, a Plastograph, a kneader, a Banbury mixer, a calender-roll, or the like, and forming it into a sheet by a common film forming method such as extrusion, calendering, and pressing.

(C) Additional resin layer

Examples of the additional resin layer (which will be hereinafter referred to also as "resin layer C" or "(C)") include resin layers of polyester, polyurethane, ethylene vinyl acetate, polycarbonate, cycloolefin polymer, triacetyl cellulose, and polymerizable liquid crystal. The additional resin layer may be a single layer alone or may be a laminate of two or more layers. The thickness of the additional resin layer can be adjusted corresponding to the desired mechanical strength or desired optical properties.

The additional resin layer is preferably an optical functional layer. Examples of the optical functional layer include light absorbing layers that absorb light at a specific wavelength, light reflecting layers that reflect light at a specific wavelength, and birefringent layers (such as polarizing elements and phase difference elements). For example, an improvement in heat shielding properties of laminated glass can be expected by laminating a layer that absorbs or reflects light in the infrared region. Alternatively, use of the laminated glass as a head-up display is enabled by laminating a layer that reflects light in the visible light region.

As the light absorbing layers, layers containing acrylic resins or the like together with inorganic fine particles of metals and metal oxides or the like and/or dyes or the like, and absorption-type polarization films or the like can be used. In the case of using the laminated glass for windshields of cars, a transmittance of 70% or more is legally required as the laminated glass, and therefore it is preferable that the transmittance of the light absorbing layers be 70% or more and 90% or less, more preferably 75% or more and 85% or less.

As the light reflecting layers and the birefringent layers, layers formed from polymerizable liquid crystals of ultraviolet curable types can be suitably used. The ultraviolet curable polymerizable liquid crystals are not specifically limited, as long as being compounds that exhibit liquid crystallinity and have an orientation in a specific direction (such as horizontal orientation, perpendicular orientation, splayed orientation, twisted orientation, and tilt orientation). The polymerizable liquid crystals are compounds that have a polymerizable group in the molecule and exhibit liquid crystallinity. The polymerizable group is not specifically limited, and examples thereof include reactive groups such as a (meth)acryloyl group, a vinyl group, a chalconyl group, a cinnamoyl group, and an epoxy group. Examples of the polymerizable liquid crystal compounds include main chain liquid crystal polymers such as polyester, polyamide, and polyester imide, which have one or more reactive groups, and side chain liquid crystal polymers such as polyacrylate, polymethacrylate, Porimaroto, and polyether.

The polymerizable liquid crystals are not specifically limited, and examples thereof include polymerizable liquid crystals disclosed in Japanese Patent No. 2587398, Japanese Patent Application Laid-Open No. 2003-315556, and Japanese Patent Application Laid-Open No. 2004-29824, "PALIOCOLOR Series" manufactured by BASF SE, and "RMM Series" manufactured by MERCK & CO., INC.

The polymerizable liquid crystals may be cholesteric liquid crystals. The cholesteric liquid crystals can be formed by curing a nematic liquid crystal having chirality or a liquid crystal composition in which a chiral agent is added to a nematic liquid crystal. Since the spiral orientation and the reflection wavelength can be optionally designed depending on the type and the amount of the chiral agent, a method of obtaining a cholesteric liquid crystal by adding a chiral agent to a nematic liquid crystal is preferable. Being different from liquid crystals that are operated in a so-called electric field, the nematic liquid crystal to be used in the present invention is used while the state of the orientation of spiral is fixed, and therefore it is preferable to use nematic liquid crystal monomers having a polymerizable group. An improvement in brightness of projection images can be expected by using a laminated glass including a light reflecting layer formed from a cholesteric liquid crystal as a head-up display.

The cholesteric liquid crystal layer includes layers having a right-handed layer that is produced from a nematic liquid crystal and a chiral agent and has a right circular polarization reflectivity, and a left-handed layer that is produced using a reverse chiral agent and has a left circular polarization reflectivity, where the reflection wavelength is not specifically limited and is adjusted by the content of the chiral agent or the reverse chiral agent.

The nematic liquid crystal monomers having a polymerizable group are a compound having a polymerizable group in the molecule and exhibiting liquid crystallinity in a certain temperature range or concentration range. Examples of the polymerizable group include a (meth)acryloyl group, a vinyl group, a chalconyl group, a cinnamoyl group, and an epoxy group. Further, in order to exhibit liquid crystallinity, it is preferable to have a mesogenic group in the molecule, and the mesogenic group, for example, means a group having a rod-shaped or plate-shaped substituent such as a biphenyl group, a terphenyl group, a (poly)benzoic acid phenyl ester group, a (poly)ether group, a benzylidene aniline group, or an acenaphthoquinoxaline group, or a group having disk-shaped substituents such as a triphenylene group, a phthalocyanine group, and an azacrown group, that is, a group having an ability to induce liquid crystal phase behavior. The liquid crystal compound having a rod-shaped or a plate-shaped group is already known in the technical field as a calamitic liquid crystal. Specifically, examples of the nematic liquid crystal monomers having such a polymerizable group include polymerizable liquid crystals disclosed in Japanese Patent Application Laid-Open No. 2003-315556 and Japanese Patent Application Laid-Open No. 2004-29824, "PALIOCOLOR Series" manufactured by BASF SE, "RMM Series" manufactured by MERCK & CO., INC. These nematic liquid crystal monomers having a polymerizable group can be used individually, or a plurality of them can be mixed for use.

As the chiral agent, a compound capable of orienting the nematic liquid crystal monomers having a polymerizable group into a right-handed or left-handed spiral and having a polymerizable group like the nematic liquid crystal monomers having a polymerizable group is preferable. Examples of the chiral agent include Paliocolor LC756 (manufactured by BASF SE) and a compound disclosed in Japanese Patent Application Laid-Open No. 2002-179668. The direction of circularly polarized light to be reflected is determined depending on the type of the chiral agent, and further the reflection wavelength of the light reflecting layer can be changed corresponding to the addition amount of the chiral agent with respect to the nematic liquid crystal. For example, as the addition amount of the chiral agent is increased, a light reflecting layer that reflects light at a wavelength on the shorter wavelength side can be obtained. The addition amount of the chiral agent differs, depending also on the type of the chiral agent and the wavelength to be reflected, but about 0.5 to 30 parts by mass is preferable, about 1 to 20 parts by mass is more preferable, and about 3 to 10 parts by mass is further preferable, with respect to 100 parts by mass of the nematic liquid crystal monomers having a polymerizable group, in order to adjust the central reflection wavelength of the light reflecting layer with respect to ordinary light to a desired wavelength region.

Further, it is also possible to add a polymerizable compound capable of reacting with the nematic liquid crystal monomers having a polymerizable group and having no liquid crystallinity. Examples of such a compound include ultraviolet curable resins, which can be used individually or a plurality of which can be mixed for use.

In the case where the nematic liquid crystal monomers having a polymerizable group and another polymerizable compound are of the ultraviolet curable type, a photopolymerization initiator is further added to the liquid crystal composition, in order to cure the liquid crystal composition containing these with ultraviolet radiation. One or a plurality of types of photopolymerization initiators can be mixed at any ratio for use. The aforementioned photopolymerization initiators can be used therefor.

In the case of using a benzophenone compound or a thioxanthone compound as a photopolymerization initiator, an aid also can be used in combination, in order to promote the photopolymerization reaction. Examples of such an aid include amine compounds such as triethanolamine, methyldiethanolamine, triisopropanolamine, n-butylamine, N-methyldiethanolamine, diethylaminoethyl methacrylate, Michler's ketone, 4,4'-diethylaminophenone, ethyl 4-dimethylaminobenzoate, (n-butoxy)ethyl 4-dimethylaminobenzoate, or isoamyl 4-dimethylaminobenzoate.

It is preferable that the photopolymerization initiator and the aid be used in an addition amount within the range not affecting the liquid crystallinity of the composition containing nematic liquid crystal monomers to be used, and the amount is preferably 0.5 parts by mass or more and 10 parts by mass or less, more preferably about 2 parts by mass or more and 8 parts by mass or less, with respect to 100 parts by mass of the compound to be cured with ultraviolet radiation in the composition. Further, the aid may be about 0.5 to 2 times the amount of the photopolymerization initiator.

When the ultraviolet curable polymerizable liquid crystal layer is a light reflecting layer, a plurality of right-handed layers and left-handed layers having the same reflection wavelength range or overlapping reflection wavelength ranges can be laminated, in order to improve the reflection efficiency. Alternatively, the reflection efficiency of the light reflecting layer can be improved also by inserting a λ/2 plate between the same right-handed layers.

Further, the reflection wavelength of the light reflection wavelength can be made broadband by laminating cholesteric liquid crystal layers having different reflection wavelength ranges, and the number of laminated layers can be adjusted corresponding to the desired width of the reflection band of the light reflecting layer. It is also possible to laminate only a plurality of the same right-handed layers, or a plurality of the same left-handed layers. At this time, use of only one type of chiral agent is needed among the materials from which the light reflective film is produced, and thus a suitable configuration is achieved.

The thickness of the cholesteric liquid crystal layer is adjusted by a predetermined reflective performance, where the smaller the thickness, the lower the reflectance, and the larger the thickness, the higher the reflectance. It is preferable that the thickness of the cholesteric liquid crystal be, for example, 0.01 to 20 µm, more preferably 0.1 to 10 µm. When the thickness falls within the aforementioned ranges, the processability and the orientation of the liquid crystal are improved.

In the case where the optical functional layer is the cholesteric liquid crystal layer, the incident polarization may be linearly polarized light or may be circularly polarized light, where it is more preferable that circularly polarized light be incident. The cholesteric liquid crystal layer also can be configured to reflect either the right circularly polarized light or the left circularly polarized light, but stable high reflectance can be easily obtained only by selecting either the right circularly polarized light or the left circularly polarized light as the incident polarized light that the light reflecting layer reflects, since circularly polarized light has no axis.

The light source of the circularly polarized light, for example, can be obtained by arranging, at the exit or the like of the linearly polarized light emitter, a so-called circularly polarizing plate in which an absorption type polarizing plate such as those of dye type and iodine type and a quarter-wave plate are laminated such that the absorption axis or the transmission axis of the polarizing plate is at 45 degrees with respect to the slow axis or the fast axis of the quarter-wave plate. The circularly polarizing plate is arranged such that linearly polarized light is incident on the polarizing plate and the quarter-wave plate in this order.

In the case where the linearly polarized light is incident on the light reflecting layer composed of cholesteric liquid crystal, a high reflectance can be obtained when the linearly polarized light turns into circularly polarized light before reaching the light reflecting layer, and therefore the circularly polarizing plate may be laminated on the light reflecting layer with an arrangement in which light is incident in the order of the circularly polarizing plate and the light reflecting layer. Alternatively, the quarter-wave plate may be laminated on the light reflecting layer such that the circularly polarizing plate is arranged at any position on the path from the light source of the linearly polarized light to the light reflecting layer, or the polarizing plate is arranged at any position on the path from the light source of the linearly polarized light to the light reflecting layer, and the quarter-wave plate is located on the polarizing plate side. Preferably, the optical functional layer is a laminate of the light reflecting layer and the quarter-wave plate. In this case, the optical functional layer is arranged such that the light reflecting layer is located on the inorganic fine particle-containing acrylic resin layer side.

The quarter-wave plate is a phase difference element having a function of converting circularly polarized light into linearly polarized light and can be obtained, for example, by uniaxially stretching a film composed of a polycarbonate or cycloolefin polymer such that the phase difference is a quarter of the wavelength, or orienting a horizontally oriented polymerizable liquid crystal with a thickness such that the phase difference is a quarter of the wavelength. This quarter-wave plate may be used alone, or in the case where the deviation of the phase difference due to wavelength dispersion is large, a phase difference element called broadband quarter-wave plate may be used. The broadband quarter-wave plate is a phase difference element in which the wavelength dependence of the phase difference is reduced, and examples thereof include a laminate of a half wavelength plate and a quarter-wave plate that have the same wavelength dispersion and are laminated such that the angle made by the slow axes of the half wavelength plate and the quarter-wave plate is 60 degrees, and a polycarbonate phase difference element (PURE-ACE WR-S: manufactured by TEIJIN LIMITED) in which the wavelength dependence of the phase difference is reduced.

As a method for producing the light reflecting layer using cholesteric liquid crystal, for example, a necessary amount of a chiral agent that causes right-handed or left-handed so as to reflect a desired wavelength is added to the nematic liquid crystal monomers having a polymerizable group. Thereafter, these are dissolved in a solvent, and a photopolymerization initiator and an aid, as required, are added thereto. Such a solvent is not specifically limited, as long as being capable of dissolving the liquid crystal monomers, the chiral agent, and the like to be used, but examples thereof include methyl ethyl ketone, toluene, methyl isobutyl ketone, cyclopentanone, acetone, and anisole, and preferable examples thereof include cyclopentanone having good solubility. Thereafter, this solution is applied onto a plastic substrate such as a PET film such that the thickness is uniform as much as possible, followed by standing for a certain time under temperature conditions such that the solution coated turns into a cholesteric liquid crystal on the substrate to be oriented with a desired spiral pitch, while the solvent is removed by heating. At this time, the orientation of the cholesteric liquid crystal can be made more uniform by subjecting the surface of the plastic film to orientation treatment such as rubbing or stretching before the coating. Subsequently, while this orientation state is maintained, the orientation is fixed by irradiation with ultraviolet radiation using a high-pressure mercury lamp or the like, and thereby a light reflecting layer as the optical functional layer is obtained.

The order of lamination of the resin layer A, the resin layer B, and the resin layer C in the intermediate film for laminated glass is not specifically limited, but it is preferable that the resin layer A be an interlayer, at least one layer of the resin layer B be the uppermost layer, that is, the layer that contacts the glass, in view of the handling properties of the intermediate film for laminated glass.

Specific examples of the layer structure of the intermediate film for laminated glass include: resin layer B/resin layer A, resin layer B/resin layer A/resin layer B, resin layer B/resin layer C/resin layer A/resin layer B, and resin layer B/resin layer C/resin layer A/resin layer C/resin layer B.

The intermediate film for laminated glass may further include other layers such as adhesive layers, pressure-sensitive adhesive layers, and/or hard coat layers between the respective layers of the resin layer A, the resin layer B, and the resin layer C.

The intermediate film for laminated glass according to the present invention has excellent transparency and can satisfy the regulation on transparency for car windshields. Further, the intermediate film for laminated glass can exhibit high sound insulating properties by the sound insulation performance exhibited by the respective layers of the inorganic fine particle-containing acrylic resin layer containing the inorganic fine particles and the acrylic resin layer, and the polyvinyl acetal resin layer. Further, a reduction in sound insulating properties due to the coincidence effect is prevented, particularly in the middle to high sound range of about 2000 to 5000 Hz, also by the fact that sound energy is effectively converted into and absorbed as thermal energy by the internal friction effect between the resin layers due to the difference in elastic properties between the acrylic resin layer and the polyvinyl acetal resin layer.

[Method for producing intermediate film for laminated glass]

The intermediate film for laminated glass can be produced by a method of stacking the inorganic fine particle-containing resin layer, the polyvinyl acetal resin layer, and the additional resin layer, optionally, which are separately formed into films as described above, together and integrating the layers by heating and pressurizing. The adhesion of the layers can be performed utilizing the adhesiveness of the inorganic fine particle-containing acrylic resin layer or the polyvinyl acetal resin layer, but can be performed also by using an adhesive or the like.

[Laminated glass]

The laminated glass includes the aforementioned intermediate film for laminated glass, and at least two transparent glass plates bonded to both sides of the intermediate film for laminated glass.

The transparent glass plates are not specifically limited, and transparent glass plates that are generally used can be used. Examples of such transparent glass plates include various inorganic glass such as float plate glass, heat-absorbing glass, polished plate glass, figured glass, meshed plate glass, wired plate glass, and curved glass; and organic glass plates such as polycarbonate plates and polymethylmethacrylate plates. These glass plates may be used individually, or two or more types of them may be used in combination. The thickness of these glass plates may be appropriately selected depending on the application and is not specifically limited, but those with a thickness of one plate of 1 to 3 mm are desirable.

A film thickness range of 0.3 to 1.6 mm is generally preferable as the overall thickness of the intermediate film for laminated glass with the transparent glass plates bonded to both sides of the intermediate film for laminated glass, practically, like that of common transparent intermediate film for laminated glass, in consideration of the penetration resistance and the weather resistance that are minimally required as a laminated glass.

It is preferable that the haze value of the laminated glass be 10% or less, more preferably 5% or less, further preferably 1% or less. When the haze value exceeds 10%, the transmission of visible light decreases, and the transparency of the laminated glass to be obtained is lost.

The visible-light transmittance as a car windshield for laminated glass needs to be 70% or more, in view of the law regulation, more preferably 75% or more.

The laminated glass can be produced by the same method as common methods for fabricating laminated glass. For example, it is produced by interposing the intermediate film for laminated glass between at least two transparent glass plates, handling the stack by passing it through a press roll or putting it into a rubber bag, followed by vacuum suction, and subjecting it to preliminary adhesion at about 70 to 110°C, while degassing the air remaining between the intermediate film and the glass plates, to form a laminate, and then putting the degassed laminate into an autoclave or pressing it to perform adhesion at about 120 to 150°C and a pressure of about 1 to 1.5 MPa.

The intermediate film for laminated glass according to the present invention has a high transparency, and therefore the laminated glass obtained using the intermediate film for laminated glass is suitably used, particularly, in applications that require transparency, among windshields, roof glass, and side glass of automobiles, window glass of buildings, and the like. Further, an improvement in heat shielding properties can be expected by providing a layer that absorbs or reflects the infrared region as an additional resin layer in the intermediate film for laminated glass. Further, use as a head-up display is enabled by providing a light reflecting layer that reflects light in the visible light region as an additional resin layer in the intermediate film for laminated glass, and the brightness of projection images can be improved by using a cholesteric liquid crystal layer as the light reflecting layer.

### [Examples]

Hereinafter, the present invention will be further specifically described by way of examples. The present invention is not limited to these examples.

### [Example 1]

### (1) Production of inorganic fine particle-containing acrylic resin layer

### <Production of acrylic resin layer A1>

291 g of n-butyl acrylate and 9 g of acrylic acid were dissolved in 300 g of ethyl acetate, and 0.15 g of azobisisobutyronitrile as a polymerization initiator was added thereto, followed by polymerization under a nitrogen stream at 70°C for 7 hours to obtain an acrylic resin (weight-average molecular weight: Mw = 1100000). The obtained acrylic resin was diluted with methyl ethyl ketone, to obtain an acrylic resin solution with a solid content of 20.0% and a viscosity of 8000 mPas.

An acrylic resin composition in which 150 parts by mass of the obtained acrylic resin solution, 37.5 parts by mass of a 40% methyl ethyl ketone dispersion of silica fine particles (MEK-ST, manufactured by Nissan Chemical Corporation), 120 parts by mass of methyl ethyl ketone, and 0.2 part by mass of an isocyanate curing agent (Coronate L, manufactured by Nippon Polyurethane Industry Co., Ltd.) were mixed and dissolved to be uniform was coated onto a polyester film (with one surface side subjected to silicone treatment) (SP-PET3811, manufactured by LINTEC Corporation, thickness 38 µm) as a release sheet using a comma coater, followed by drying, and it was covered by a polyester film (with one surface side subjected to silicone treatment) (LT-H38, manufactured by LINTEC Corporation, thickness 38 µm) as a release sheet, thereby forming an acrylic resin layer A1 (thickness 70 µm).

### (2) Production of polyvinyl butyral resin layer

### <Production of polyvinyl butyral resin layers B>

A solution in which 40 parts by mass of triethylene glycol-di-2-ethyl hexanoate (3GO) as a plasticizer, 0.2 part by mass of a benzotriazole compound (Tinuvin 326) as an ultraviolet absorber, and 0.2 part by mass of 2,6-di-tert-butyl-p-cresol as an antioxidant were dissolved was added to 100 parts by mass of a polyvinyl butyral resin (PVB), followed by melt-kneading using a mixing roll to be uniform, and then press molding using a press molding machine at 150°C for 30 minutes, to produce two polyvinyl butyral resin layers B (length 35 cm × width 35 cm) having a thickness of 0.38 mm.

### (3) Production of intermediate film for laminated glass, and laminated glass

The acrylic resin layer A1 and the polyvinyl butyral resin layers B obtained in (1) and (2) were stacked in the order of B/A1/B, the layers were sandwiched from both sides with two transparent float glass plates (length 30 cm × width 2.5 cm × thickness 2.5 mm), followed by pressure bonding under conditions of 120°C and a pressure of 1.0 MPa for 20 minutes using a hot press machine, so that an intermediate film for laminated glass and a laminated glass were obtained by performing the production of the intermediate film and the production of the laminated glass at the same time.

### [Example 2]

### (1) Production of inorganic fine particle-containing acrylic resin layer

### <Production of acrylic resin layer A1>

An acrylic resin layer A1 (thickness 70 µm) was formed by the same procedure as in (1) of Example 1.

### (2) Production of acrylic resin laminate

### <Production of acrylic resin laminate with layer structure of A2/A1/A2>

As an ultraviolet curable acrylic resin composition for forming an ultraviolet curable resin layer A2, 52.5 parts by mass of photomer 4017 (manufactured by Cognis Japan Ltd.) as an acrylate monomer, 47.5 parts by mass of UX-0937 (manufactured by Nippon Kayaku Co., Ltd.) as a polyether urethane acrylate, and 7.5 parts by mass of Irgacure 184 (manufactured by BASF SE) as a photopolymerization initiator were sequentially mixed. Thereafter, 107.5 parts by mass of methyl ethyl ketone was added thereto, to obtain a 50% dilute solution of the ultraviolet curable acrylic resin composition.

The ultraviolet curable acrylic resin composition was coated onto a PET film (A4100, manufactured by TOYOBO CO., LTD., thickness 50 µm) using a bar coater, and after the solvent was removed by heating at 40°C for 1 minute, the surface on one side of the acrylic resin layer A1 from which the release sheet was separated was fitted thereto using a hand roller, followed by curing under conditions of 120 W, 5 m/min, and 1 pass using a high-pressure mercury lamp (HX4000L, manufactured by HARISON TOSHIBA LIGHTING Corporation), to laminate the ultraviolet curable resin layer A2 onto the acrylic resin layer A1. Likewise, the aforementioned ultraviolet curable acrylic resin composition was coated onto a PET film (A4100, manufactured by TOYOBO CO., LTD., thickness 50 µm) using a bar coater, and after the solvent was removed by heating at 40°C for 1 minute, the surface on another side of the acrylic resin layer A1 of the above-produced laminate from which the release sheet was separated was fitted thereto using a hand roller, followed by curing under conditions of 120 W, 5 m/min, and 1 pass using a high-pressure mercury lamp (HX4000L, manufactured by HARISON TOSHIBA LIGHTING Corporation). The PETs on both sides were peeled off to obtain an acrylic resin laminate with a layer structure of A2/A1/A2. The thickness of each ultraviolet curable resin layer A2 was 10 µm.

### (3) Production of polyvinyl butyral resin layer

### <Production of polyvinyl butyral resin layer B>

A polyvinyl butyral resin layer B was produced by the same procedure as in (2) of Example 1.

### (4) Production of intermediate film for laminated glass, and laminated glass

An intermediate film for laminated glass, and a laminated glass were obtained in the same manner as in Example 1 except that the aforementioned acrylic resin laminate A2/A1/A2 was used instead of the acrylic resin layer A1 of Example 1. The thickness of each layer forming the laminated glass is shown in Table 2.

### [Example 3]

An intermediate film for laminated glass, and a laminated glass were obtained in the same manner as in Example 2 except that the thickness of the acrylic resin layer A1 was set to 35 µm instead of 70 µm.

### [Example 4]

### (1) Production of light reflecting layer C

(1-a) Liquid crystal compositions (R1) and (R2) of the compositions shown in Table 1 were each prepared. In Table 1, the units are expressed as part(s) by mass.

**[Table 1]**

| Materials | Material name (manufacturer name) | R1 | R2 |
|---|---|---|---|
| | | Amout added (part(s)) | Amount added (part(s)) |
| Polymerizable liquid crystal monomers | LC242 (BASF SE) | 20 | 20 |
| Chiral agent | LC756 (BASF SE) | 1.26 | 0.7 |
| Photopolymerization initiator | IrgacureTPO (BASF SE) | 1 | 1 |
| Solvent | Cyclopentanone | 80 | 80 |

(1-b) Each of the liquid crystal compositions (R1) and (R2) was coated onto a rubbed surface of each PET film using a wire bar at room temperature such that the thickness of each light reflecting layer to be obtained after drying was 0.5 µm, to form a coating film. As the PET film that was a plastic substrate, a PET film, manufactured by TOYOBO CO., LTD. (product name A4100, no undercoat layer, thickness 50 µm) in which a surface having no undercoat layer had been rubbed beforehand by the method disclosed in Example 1 of Japanese Patent Application Laid-Open No. 2002-90743 was used.
(1-c) Each coating film was heated at 150°C for 5 minutes to remove the solvent and to form a cholesteric liquid crystal phase. Subsequently, UV irradiation was performed at an output of 120 W for 5 to 10 seconds using a high-pressure mercury lamp (manufactured by HARISON TOSHIBA LIGHTING Corporation), to fix the cholesteric liquid crystal phase, thereby obtaining a light reflecting layer C1 and a light reflecting layer C2 respectively on the PET films. The thickness of both the light reflecting layer C1 and the light reflecting layer C2 was 0.5 µm.

### (2) Production of acrylic resin layer laminate

### <Production of acrylic resin laminate with layer structure sandwiched between two light reflecting layers of C1/A2/A1/A2/C2>

(2-a) Using a bar coater, the ultraviolet curable acrylic resin composition used in (2) of Example 2 was coated onto the light reflecting layer C1 (using the liquid crystal composition (R1)) on the PET film produced in (1), and the solvent was removed at 40°C for 1 minute, to form an ultraviolet curable resin layer A2. The surface on one side of the acrylic resin layer A1 produced in the same manner as in (1) of Example 1 from which the release sheet was separated was fitted onto the ultraviolet curable resin layer A2 of the obtained laminate using a hand roller, followed by curing under conditions of 120 W, 5 m/min, and 1 pass using a high-pressure mercury lamp (HX4000L, manufactured by HARISON TOSHIBA LIGHTING Corporation), to laminate the acrylic resin layer A1 with the C-1 via the ultraviolet curable resin layer A2.
(2-b) In the same manner as in (2) (a), the ultraviolet curable acrylic resin composition used in (2) of Example 2 was coated, using a bar coater, onto the light reflecting layer C2 (using the coating solution (R2)) on the PET film produced in (1), and the solvent was removed at 40°C for 1 minute, to form an ultraviolet curable resin layer A2. The ultraviolet curable resin layer A2 and the surface on the other side of the acrylic resin layer A1 of the laminate produced in (2-a) from which the release sheet was separated were fitted together using a hand roller, followed by curing under conditions of 120 W, 5 m/min, and 1 pass using a high-pressure mercury lamp (HX4000L, manufactured by HARISON TOSHIBA LIGHTING Corporation). The PETs on both sides were peeled off, to obtain an acrylic resin laminate with a layer structure sandwiched between two light reflecting layers of C1/A2/A1/A2/C2. The thickness of the acrylic resin layer A1 was 70 µm, and the thickness of each of the two ultraviolet curable resin layer A2 was 10 µm.
(2-c) The central reflection wavelengths of the light reflecting layer C1 and the light reflecting layer C2 were respectively 540 nm (the half width was 158 nm) and 732 nm (the half width was 170 nm), and the reflectance at the central reflection wavelength of each of the light reflecting layers C1 and C2 was about 18%. The base line of the reflectance of each light reflecting layer was about 10%. The average transmittance of visible light in the front direction of the acrylic resin laminate containing the light reflecting layer C1 and the light reflecting layer C2 was about 82%, and the reflectance at about 550 nm was about 17%.

### (3) Production of intermediate film for laminated glass, and laminated glass

The polyvinyl butyral resin layers B were stacked on both sides of the acrylic resin laminate obtained in (2), in the order of B/C1/A2/A1/A2/C2/B, it was sandwiched from both sides by two transparent float glass plates (length 30 cm × width 30 cm × thickness 2.5 mm), followed by pressure bonding under conditions of 120°C and a pressure of 1.0 MPa for 20 minutes using a hot press machine, so that an intermediate film for laminated glass, and a laminated glass were obtained by performing the production of the intermediate film and the production of the laminated glass at the same time. The visible-light transmittance of the obtained laminated glass of the present invention was 72%. Further, as an image was projected on the obtained laminated glass from a liquid crystal projector configured to emit linearly polarized light via a quarter-wave plate (PURE-ACE WR-S, manufactured by TEIJIN LIMITED) in a darkroom, a bright clear projection image was obtained.

### [Comparative Example 1]

An intermediate film for laminated glass, and a laminated glass were obtained in the same manner as in Example 1 except that the resin layers B were stacked in the order of the resin layer B/the resin layer B without using the acrylic resin layer A1.

### (Evaluation)

For each laminated glass obtained in Examples 1 to 3 and Comparative Example 1 above, the haze value, the loss factor, and the visible-light transmittance (Tv) were measured by the following methods. The results are shown in Table 2.

### (1) Measurement of haze value

According to JIS K 6714 "Methacrylate Sheets for Aircrafts", the haze value with respect to light at 340 to 1800 nm was measured using an integrating turbidimeter (manufactured by TokyoDenshoku.co., Ltd). In the case where the haze value is 10% or less, the laminated glass can be evaluated as having a high transparency, and a lower haze value indicates that the transparency is more excellent.

### (2) Measurement of loss factor

A sample (width 25 mm × length 300 mm) was cut out of the laminated glass, and the sample was vibrated in a thermostatic layer at 20°C, using a vibration generator for dumping test (exciter "G21-005D", manufactured by SHINKEN CO., LTD.), the vibration characteristics to be obtained therefrom were amplified with a mechanical impedance amplifier ("XG-81", manufactured by RION Co., Ltd.), and the vibration spectrum was analyzed using an FFT spectrum analyzer ("FFT spectrum analyzer-HP 3582A", manufactured by Yokogawa-Hewlett-Packard, Ltd.), to determine the loss factor of the peaks at about 200 Hz and in the frequency ranges of 2000 to 3000 Hz for each sample. A higher loss factor indicates that the sound insulating properties are more excellent.

### (3) Measurement of visible-light transmittance (Tv)

According to JIS Z 8722 and JIS R 3106, the visible-light transmittance (Tv) at 380 to 780 nm was determined using a direct-recording spectrophotometer ("UV3100", manufactured by SHIMADZU CORPORATION).

The thickness of each layer of the laminated glass and the evaluation results are as follows.

**[Table 2]**

| | Layer-constituting materials | | Example 1 | Example 2 | Example 3 | Example 4 | Comparative Example 1 |
|---|---|---|---|---|---|---|---|
| Layer structure | Transparent glass plate | Thickness (µm) | 2500 | 2500 | 2500 | 2500 | 2500 |
| | Polyvinyl butyral resin layer B | | 380 | 380 | 380 | 380 | 380 |
| | Light reflecting layer C1 | | | | | 0.5 | |
| | Ultraviolet curable resin layer A2 | | | 10 | 10 | 10 | |
| | Acrylic resin layer A1 | | 70 | 70 | 35 | 70 | |
| | Ultraviolet curable resin layer A2 | | | 10 | 10 | 10 | |
| | Light reflecting layer C2 | | | | | 0.5 | |
| | Polyvinyl butyral resin layer B | | 380 | 380 | 380 | 380 | 380 |
| | Transparent glass plate | | 2500 | 2500 | 2500 | 2500 | 2500 |
| Overall thickness of intermediate film (µm) | | | 830 | 850 | 815 | 851 | 760 |
| Loss factor @20°C | @200 Hz | Absolute value | 0.13 | 0.15 | 0.035 | 0.15 | 0.023 |
| | | Ratio with respect to Comparative Example 1 | 5.65 | 6.52 | 1.52 | 6.52 | 1 |
| | @2000 Hz | Absolute value | 0.1 | 0.25 | 0.1 | 0.25 | 0.065 |
| | | Ratio with respect to Comparative Example 1 | 1.54 | 3.85 | 1.54 | 3.85 | 1 |
| Optical evaluation | Transmittance | % | 90 | 90 | 90 | 72 | 92 |
| | Haze | % | 0.3 | 0.3 | 0.3 | 0.4 | 0.2 |

From Table 2, it was shown that Examples 1 to 3 exhibited a high loss factor of about 1.5 to 6.5 times as compared with Comparative Example 1, at both about 200 Hz and 2000 to 3000 Hz, so as to have excellent sound insulating properties. Examples 1 to 4 exhibited a high value of transmittance of 70% or more, which satisfies the law regulation for windshields of automobiles, and in particular, Examples 1 to 3 had a transmittance of 90%. Further, Examples 1 to 4 only showed a haze value that is slightly higher than that of Comparative Example 1 and showed a sufficiently low haze value to achieve the transparency required for laminated glass. From these results, it was shown that an intermediate film for laminated glass laminating at least two types of layers of an acrylic resin layer containing inorganic fine particles and a polyvinyl acetal resin layer, like Examples 1 to 3, allows a high loss factor to be obtained as compared with the intermediate film for laminated glass of Comparative Example 1, while maintaining a transparency comparable to an intermediate film for laminated glass laminating only polyvinyl acetal resin layers, like Comparative Example 1. That is, it was shown to be excellent in both transparency and sound insulating properties. Further, it was shown that the laminated glass of Example 4 can achieve a bright clear projection image, because of including a light reflecting layer using cholesteric liquid crystal which reflects light in the visible light region as an additional resin layer, and therefore can be suitably used as a head-up display.

## Claims

1. An intermediate film for laminated glass **characterized in that**
a polyvinyl acetal resin layer; and
an inorganic fine particle-containing acrylic resin layer containing inorganic fine particles and an acrylic resin
are laminated.

2. The intermediate film for laminated glass according to claim 1, wherein
the polyvinyl acetal resin layer includes a first polyvinyl acetal resin layer and a second polyvinyl acetal resin layer, and
the first polyvinyl acetal resin layer, the inorganic fine particle-containing acrylic resin layer, and the second polyvinyl acetal resin layer are laminated in this order.

3. The intermediate film for laminated glass according to claim 1 or 2, wherein
the inorganic fine particles are at least one selected from the group consisting of calcium carbonate and silica.

4. The intermediate film for laminated glass according to any one of claims 1 to 3, comprises
an additional resin layer between the polyvinyl acetal resin layer and the inorganic fine particle-containing acrylic resin layer.

5. The intermediate film for laminated glass according to claim 4, wherein
the additional resin layer is an optical functional layer.

6. The intermediate film for laminated glass according to claim 5, wherein
the optical functional layer is a laminate of one or two or more layers selected from the group consisting of a light absorbing layer, a light reflecting layer, and a birefringent layer.

7. The intermediate film for laminated glass according to claim 5 or 6, wherein
the optical functional layer is a laminate of a light reflecting layer and a quarter-wave plate.

8. The intermediate film for laminated glass according to claim 7, wherein
the optical functional layer is arranged such that the light reflecting layer is located on the inorganic fine particle-containing acrylic resin layer side.

9. The intermediate film for laminated glass according to any one of claims 5 to 8, wherein
the optical functional layer contains a polymerizable liquid crystal.

10. The intermediate film for laminated glass according to claim 9, wherein
the polymerizable liquid crystal is cholesteric liquid crystal.

11. A laminated glass comprises
the intermediate film for laminated glass according to any one of claims 1 to 10; and
at least two transparent glass plates bonded to both sides of the intermediate film for laminated glass.

12. The laminated glass according to claim 11, wherein
the laminated glass has a haze of 1% or less.
